# EUROPEAN PATENT APPLICATION

(11) **EP 4 624 773 A1**
(43) Date of publication of application: **01.10.2025**
(21) Application number: 25164047.0
(22) Date of filing: 17.03.2025
(51) Int. Cl.: F16C 1/10, F16C 1/16, F16C 1/26

(54) **ARRANGEMENT FOR FASTENING A BOWDEN CABLE**

(30) Priority: 26.03.2024 IT 202400006679
(71) Applicant: DENSO THERMAL SYSTEMS S.p.A., 10046 Poirino (Torino) (IT)
(72) Inventor: GAI, Fabrizio, 10046 Poirino (Torino) (IT); FERRARESE, Claudio, 10046 Poirino (Torino) (IT); BELLUOMO, Denis, 10046 Poirino (Torino) (IT)
(74) Representative: Vanzini, Christian

(57) **Abstract**

Arrangement for fastening a Bowden cable, comprising a force transmitting cable (11) having an end (11a) provided with an end fastening element (13), and a driven element (B) comprising an anchor scaffold (20) made of plastic material, to which the end fastening element (13) of the force transmitting cable (11) is coupled, the anchor scaffold (20) comprising a fastening plate (21) and a connection portion (22) connecting the fastening plate (21) to the driven element (B) in such a way that the fastening plate (21) is spaced from the driven element (B), wherein a through-hole (23) is formed through the fastening plate (21), receiving an inflection section (13c) of the end fastening element (13). The anchor scaffold (20) comprises a first protrusion (24) arranged between a proximal section (13a) of the end fastening element (13) and the fastening plate (21), and a second protrusion (25) arranged between a distal section (13e) of the end fastening element (13) and the fastening plate (21).

## Description

The present invention relates to an arrangement for fastening a Bowden cable, of the type comprising
a force transmitting cable having an end provided with an end fastening element, said end fastening element comprising successively a proximal section extending rectilinearly from and coaxial with the end of the force transmitting cable, a proximal curve connected to the proximal section, an inflection section, a distal curve connected to the proximal curve through the inflection section, and a distal section connected to the distal curve and extending in a direction parallel to said proximal section, and
a driven element comprising an anchor scaffold of plastic material, to which the end fastening element of the force transmitting cable is coupled, said anchor scaffold comprising a fastening plate and a connection portion connecting the fastening plate to the driven element in such a way that the fastening plate is spaced from the driven element, wherein a through-hole is formed through the fastening plate receiving the inflection section of the end fastening element, the proximal section and the distal section of the end fastening element being respectively arranged on opposite faces of the fastening plate, with the distal section arranged, with respect to a direction parallel to the axis of the through-hole, between the fastening plate and the driven element.

The use of the aforementioned fastening arrangement is known, for example, in the automotive sector, wherein Bowden cables are used for motion transmission between a control member, arranged for example on the dashboard of a motor vehicle, and a driven element provided in a climate control unit of the motor vehicle, such as a flap or another movable member.

An object of the invention is to provide a solution for eliminating or at least reducing hysteresis or play in the motion transmission within the above-described fastening arrangement.

This object is achieved according to the invention by a fastening arrangement of the type defined at the beginning, wherein the anchor scaffold comprises
a first protrusion arranged between the proximal section of the end fastening element and the fastening plate, said first protrusion extending from the fastening plate in a direction parallel to the axis of the through-hole, such that the first protrusion is protruding with respect to an axially outer surface of the fastening plate arranged diametrically opposite to the first protrusion with respect to the through-hole, and
a second protrusion arranged between the distal section of the end fastening element and the fastening plate, said second protrusion extending from the fastening plate in a direction parallel to the axis of the through-hole, so that the second protrusion is protruding with respect to an axially inner surface of the fastening plate arranged around the through-hole,
wherein the connection portion connecting the fastening plate to the driven element is arranged, with respect to a direction parallel to the axis of the through-hole, between the first protrusion and the driven element.

The increased thickness provided by the first protrusion and the second protrusion in specific areas of the anchor scaffold ensures axial contrast to any movement of the end fastening element of the Bowden cable, eliminating or at least reducing hysteresis or play in the motion transmission. This result is achieved without affecting the ease of assembly of the end fastening element.

Preferred embodiments of the invention are defined in the dependent claims, which are to be understood as an integral part of the present description.

According to a preferred embodiment, the anchor scaffold further comprises a pair of appendages extending from the first protrusion and arranged in a fork-like manner on opposite sides of the proximal section of the end fastening element. Advantageously, this embodiment allows achieving an anti-mistake function, in the sense that the fork-like arranged appendages define a unique mounting position for the end fastening element.

Additional features and advantages of the invention will become clearer from the following detailed description of an embodiment of the invention, made with reference to the accompanying drawings, provided purely for illustrative and non-limiting purposes, wherein:
- Figure 1 is a perspective view of an arrangement for fastening a Bowden cable according to the invention;
- Figure 2 is a sectional perspective view of the fastening arrangement of Figure 1.

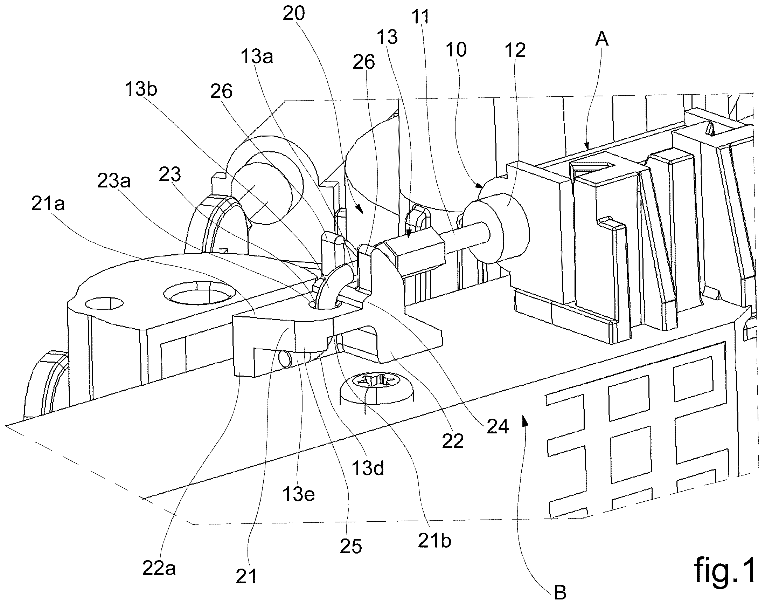

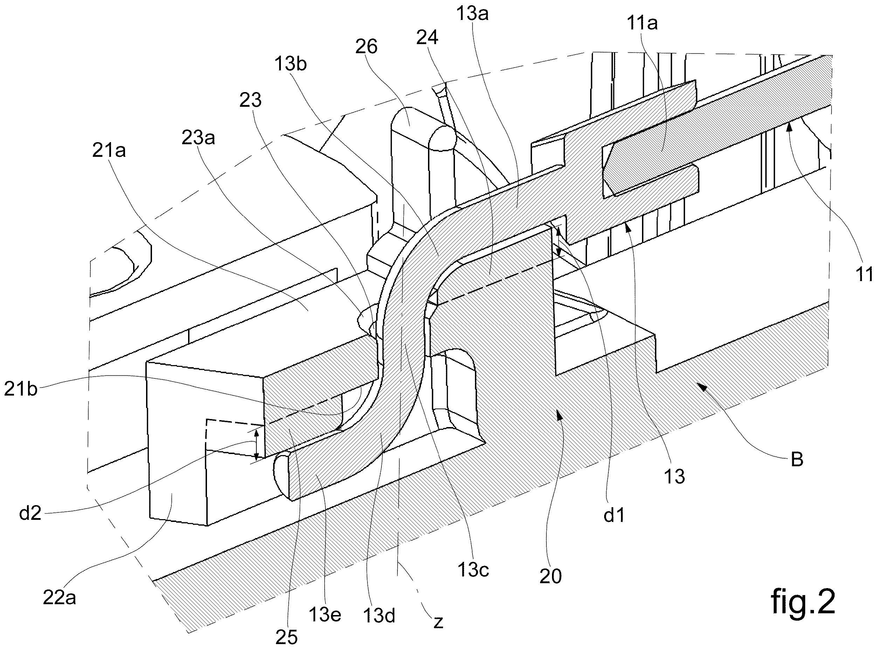

Figures 1 and 2 illustrate an arrangement for fastening a Bowden cable according to the invention.

The arrangement in question comprises a Bowden cable 10, conventionally comprising a force transmitting cable 11 made of metal material, and a sheath 12, within which the force transmitting cable 11 is enclosed. The sheath 12 is fixed to a support structure A in a manner known per se and not essential to the invention.

The force transmitting cable 11 has an end 11a provided with an end fastening element 13, which is fixed to the end 11a in a manner known per se, for example, by crimping or welding. The end fastening element 13 is a rigid element made of metal material, comprising, in succession, a proximal section 13a extending rectilinearly from and coaxial with the end 11a of the force transmitting cable 11, a proximal curve 13b connected to the proximal section 13a, an inflection section 13c, a distal curve 13d connected to the proximal curve 13b through the inflection section 13c, and a distal rectilinear section 13e connected to the distal curve 13d and extending in a direction parallel to the proximal section 13a. Overall, the end fastening element 13 thus has an approximately S-shaped or Z-shaped form.

The described arrangement further comprises a driven element B, including an anchor scaffold 20 made of plastic material, to which the end fastening element 13 of the force transmitting cable 11 is coupled. The other end of the force transmitting cable 11 and its respective sheath 12, not illustrated, are mounted in a manner known per se and not essential to the invention.

The anchor scaffold 20 comprises a fastening plate 21 and a connection portion 22 connecting the fastening plate 21 to the driven element B in such a way that the fastening plate 21 is spaced from the driven element B. As clearly visible in the figures, there is a space between the fastening plate 21 and the driven element B.

A through-hole 23 is formed through the fastening plate 21, configured to receive the inflection section 13c of the end fastening element 13. In the mounted condition of the end fastening element 13, the proximal section 13a and the distal section 13e of the end fastening element 13 are respectively arranged on opposite faces 21a, 21b of the fastening plate 21, with the distal section 13e axially positioned between the fastening plate 21 and the driven element B. For the purposes of this description, the term "axial direction" refers to a direction parallel to the z-axis of the through-hole 23.

The assembly of the end fastening element 13 into the anchor scaffold 20 is performed by initially inserting the distal section 13e of the end fastening element 13 into the through-hole 23, with this distal section 13e oriented along the z-axis of the through-hole 23. The insertion process is then continued while simultaneously rotating the end fastening element 13 to accommodate its double-curved shape, finally reaching the position shown in Figures 1 and 2. Once this position is reached, the sheath 12 of the Bowden cable 10 can be secured to its corresponding support structure A.

Around the through-hole 23, on the axially outer surface 21a of the fastening plate 21, i.e., on the face of the fastening plate 21 facing away from the driven element B, there is a chamfer 23a to facilitate the insertion of the end fastening element 13.

The anchor scaffold 20 comprises a first protrusion 24 arranged between the proximal section 13a of the end fastening element 13 and the fastening plate 21. The first protrusion 24 extends from the fastening plate 21 in a direction parallel to the z-axis of the through-hole 23, such that the first protrusion 24 is protruding with respect to the axially outer surface 21a of the fastening plate 21, arranged diametrically opposite the first protrusion 24 with respect to the through-hole 23. In Figure 2, a dashed line graphically represents the extension of the axially outer surface 21a at the base of the first protrusion 24. The increased thickness in the axial direction provided by the first protrusion 24 is denoted by d1.

The anchor scaffold 20 further comprises a second protrusion 25 arranged between the distal section 13e of the end fastening element 13 and the fastening plate 21. The second protrusion 25 extends from the fastening plate 21 in a direction parallel to the z-axis of the through-hole 23, so that the second protrusion 25 is protruding with respect to the axially inner surface 21b of the fastening plate 21 (i.e., the face of the fastening plate 21 facing the driven element B) arranged around the through-hole 23. In Figure 2, a dashed line graphically represents the extension of the axially inner surface 21b at the base of the second protrusion 25. The increased thickness in the axial direction provided by the second protrusion 25 is denoted by d2.

The anchor scaffold 20 also comprises a pair of appendages 26, extending from the first protrusion 24 and arranged in a fork-like manner on opposite sides of the proximal section 13a of the end fastening element 13.

In the illustrated embodiment, the connection portion 22, which connects the fastening plate 21 to the driven element B, is axially arranged between the first protrusion 24 and the driven element B. The connection portion 22 further comprises a lateral portion 22a, extending along one side of the distal section 13e of the end fastening element 13. As can be observed in Figure 1, the fastening plate 21 is arranged cantilevered from the connection portion 22.

The increased thickness provided by the first protrusion 24 and the second protrusion 25 in specific areas of the anchor scaffold 20 ensures perpendicular resistance to the motion transmission axis against any movement of the end fastening element 13 of the Bowden cable 10, eliminating or at least reducing hysteresis or play in the motion transmission. This result is achieved without affecting the ease of assembly of the end fastening element and further constrains the end fastening element 13 to a unique mounting position. The increased thickness d1 is actually absent in the area of the axially outer surface 21a of the fastening plate 21 (where it would obstruct the rotation of the end fastening element 13 during its insertion into the through-hole 23), and the increased thickness d2 is absent in the area of the axially inner surface 21b around the through-hole 23 (where it would similarly obstruct the rotation of the end fastening element 13 during insertion into the through hole 23).

Furthermore, the fork-like arranged pair of appendages 26 allows achieving a specific function of eliminating hysteresis along the motion transmission axis, without affecting the ease of assembly of the element.

## Claims

1. Arrangement for fastening a Bowden cable, comprising
a force transmitting cable (11) having an end (11a) provided with an end fastening element (13), said end fastening element (13) comprising successively a proximal section (13a) extending rectilinearly from and coaxial with the end (11a) of the force transmitting cable (11), a proximal curve (13b) connected to the proximal section (13a), an inflection section (13c), a distal curve (13d) connected to the proximal curve (13b) through the inflection section (13c), and a distal section (13e) connected to the distal curve (13d) and extending in a direction parallel to said proximal section (13a), and
a driven element (B) comprising an anchor scaffold (20) of plastic material, to which the end fastening element (13) of the force transmitting cable (11) is coupled, said anchor scaffold (20) comprising a fastening plate (21) and a connection portion (22) connecting the fastening plate (21) to the driven element (B) in such a way that the fastening plate (21) is spaced from the driven element (B), wherein a through-hole (23) is formed through the fastening plate (21) receiving the inflection section (13c) of the end fastening element (13), the proximal section (13a) and the distal section (13e) of the end fastening element (13) being respectively arranged on opposite faces (21a, 21b) of the fastening plate (21), with the distal section (13e) arranged axially between the fastening plate (21) and the driven element (B), with respect to a direction parallel to the axis (z) of the through-hole (33),
wherein the anchor scaffold (20) comprises
a first protrusion (24) arranged between the proximal section (13a) of the end fastening element (13) and the fastening plate (21), said first protrusion (24) extending from the fastening plate (21) in a direction parallel to the axis (z) of the through-hole (23) such that the first protrusion (24) is protruding with respect to an axially outer surface (21a) of the fastening plate (21) arranged diametrically opposite to the first protrusion (24) with respect to the through-hole (23), and
a second protrusion (25) arranged between the distal section (13e) of the end fastening element (13) and the fastening plate (21), said second protrusion (25) extending from the fastening plate (21) in a direction parallel to the axis (z) of the through-hole (23), so that the second protrusion (25) is protruding with respect to an axially inner surface (21b) of the fastening plate (21) arranged around the through-hole (23),
**characterized in that** the connection portion (22) that connects the fastening plate (21) to the driven element (B) is arranged, with respect to a direction parallel to the axis (z) of the through-hole (23), between the first protrusion (24) and the driven element (B).

2. Fastening arrangement according to claim 1, wherein the anchor scaffold (20) further comprises a pair of appendages (26) extending from the first protrusion (25) and arranged in a fork-like manner on opposite sides of the proximal section (13a) of the end fastening element (13).

3. Fastening arrangement according to claim 1 or 2, wherein the connection portion (22) connecting the fastening plate (21) to the driven element (B) comprises a lateral portion (22a) extending along a side of the distal section (13e) of the end fastening element (13).

4. Fastening arrangement according to any previous claim, wherein the fastening plate (21) is arranged cantilevered from the connection portion (22).
